# FASCICULE DE BREVET EUROPEEN

(11) **EP 4 146 511 B1**
(45) Date de publication et mention de la délivrance du brevet: **01.07.2026**
(21) Numéro de dépôt: 21723250.3
(22) Date de dépôt: 04.05.2021
(51) Int. Cl.: B60W 40/04, B60W 30/12

(54) **PROCÉDÉ DE GUIDAGE D'UN VÉHICULE AUTOMOBILE**
VERFAHREN ZUM FÜHREN EINES KRAFTFAHRZEUGS
METHOD FOR GUIDING A MOTOR VEHICLE

(30) Priorité: 07.05.2020 FR 2004524
(43) Date de publication de la demande: 15.03.2023
(73) Titulaire: Ampere SAS, 92100 Boulogne-Billancourt (FR)
(72) Inventeur: QUILLIARD, Raphael, 91300 Massy (FR); BROSSARD, Luc, 76000 ROUEN (FR)
(74) Mandataire: Renault Group
(86) Numéro de dépôt international: PCT/EP2021/061708
(87) Numéro de publication internationale: WO 2021/224245

(56) Documents cités:
- EP-A1- 2 251 239
- EP-B1- 2 251 239
- DE-A1- 102010 062 129
- FR-A1- 3 069 222

## Description

### DOMAINE TECHNIQUE DE L'INVENTION

La présente invention concerne de manière générale le domaine des systèmes d'aide à la conduite.

Elle concerne plus particulièrement les systèmes de guidage par détection de marquages au sol.

Elle concerne également un véhicule automobile équipé d'un tel système de guidage.

### ETAT DE LA TECHNIQUE

Certains véhicules automobiles sont actuellement équipés d'un dispositif de capture d'images conçu pour détecter la position de lignes marquées au sol et délimitant une voie de circulation. La position des lignes, autour et à l'avant du véhicule, permet de mettre en œuvre des systèmes de guidage pour aider à la conduite. Ces systèmes de guidage peuvent par exemple être des systèmes de centrage maintenant le véhicule à équidistance entre une ligne droite et une ligne gauche. De tels systèmes de guidage sont particulièrement utilisés dans les véhicules autonomes.

L'élargissement de la voie de circulation, par exemple dû à un dédoublement de la voie, un croisement ou à une sortie d'autoroute, peut néanmoins induire en erreur ces systèmes de guidage. Ainsi, dans le cas d'un dédoublement de la voie, un système de centrage risque de guider le véhicule entre les deux nouvelles voies, à cheval sur celles-ci.

Ces systèmes de guidage peuvent aussi être induits en erreur par une mauvaise détection de la position des lignes. Par exemple, si le véhicule confond une ombre ou un reflet avec une ligne, le système de guidage peut amener le véhicule à suivre cette ombre ou ce reflet et donc à guider le véhicule hors de la voie.

De façon générale, les élargissements de voie peuvent tromper ces systèmes de guidage par détection de marquages au sol et/ou les amener à suivre des trajectoires non-optimales en termes de distance parcourue ou d'énergie

DE 10 2010 062129 A1 et EP 2 251 239 A1 décrivent des systèmes d'assistance à la conduite d'un véhicule automobile dans la situation particulière d'un élargissement de voie.

### PRÉSENTATION DE L'INVENTION

Afin de remédier à l'inconvénient précité de l'état de la technique, la présente invention propose un procédé de guidage d'un véhicule automobile selon la revendication 1.

Ainsi, grâce à l'invention, une fois l'élargissement de voie détecté, il est possible de guider le véhicule en fonction des marques de l'une seulement des deux voies. Lors d'un dédoublement de voie, cela évite par exemple à un système de centrage de positionner le véhicule entre les deux nouvelles voies. De même, pour une sortie, cela évite de guider le véhicule à l'endroit de séparation des voies.

Si le système de centrage confond une ombre ou un reflet avec une des deux lignes, le système de guidage selon l'invention permet de continuer à suivre l'autre ligne qui est correctement détectée et qui s'écarte le moins de la trajectoire.

De plus, lorsqu'il faut choisir entre deux nouvelles voies, sélectionner la voie en fonction de la trajectoire du véhicule permet d'optimiser la consommation d'énergie ou la distance parcourue. Le véhicule est alors guidé vers la voie de circulation la plus logique par rapport à sa trajectoire.

D'autres caractéristiques avantageuses et non limitatives du procédé de guidage conforme à l'invention, prises individuellement ou selon toutes les combinaisons techniquement possibles, sont les suivantes :
- la sélection de ladite première ligne est effectuée en fonction d'un déplacement latéral dudit véhicule automobile par rapport à ladite ligne gauche et à ladite ligne droite, ledit déplacement latéral étant déterminé à une distance de projection prédéterminée à l'avant du véhicule ;
- le guidage dudit véhicule automobile est effectué uniquement en fonction de la position de ladite première ligne ;
- le procédé de guidage comprend une étape de détermination d'une position corrigée d'une deuxième desdites lignes droite et gauche ;
- le guidage dudit véhicule automobile est effectué en fonction de ladite position corrigée ;
- ladite position corrigée est déterminée sur la base de la position de ladite première ligne et d'une largeur initiale déterminée avant que ou lorsque ledit élargissement est détecté ;
- la détection dudit élargissement est effectuée en fonction d'au moins une largeur de ladite voie déterminée à l'avant dudit véhicule ;
- ladite trajectoire est acquise sur la base d'au moins l'un des paramètres suivants : une vitesse de lacet et une vitesse longitudinale ; une donnée de navigation ; un angle de rotation du volant ; une donnée issue d'un gyroscope.

L'invention propose également un véhicule automobile comprenant un dispositif de capture d'images conçu pour capter une image sur laquelle apparaissent une ligne droite et une ligne gauche, lesdites lignes encadrant une voie de circulation sur laquelle circule ledit véhicule automobile, et un processeur programmé pour mettre en œuvre le procédé de guidage décrit ci-dessus.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DÉTAILLÉE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une représentation schématique d'un véhicule circulant entre les lignes d'une voie de circulation ;
[Fig. 2] est une représentation schématique d'un élargissement de la voie de circulation de la figure 1 ;
[Fig. 3] est une représentation schématique du guidage du véhicule de la figure 1 dans un premier exemple d'élargissement de voie ;
[Fig. 4] est une représentation schématique du guidage du véhicule de la figure 1 dans un deuxième exemple d'élargissement de voie ;
[Fig. 5] est un schéma bloc d'une séquence d'étapes permettant le guidage du véhicule de la figure 1.

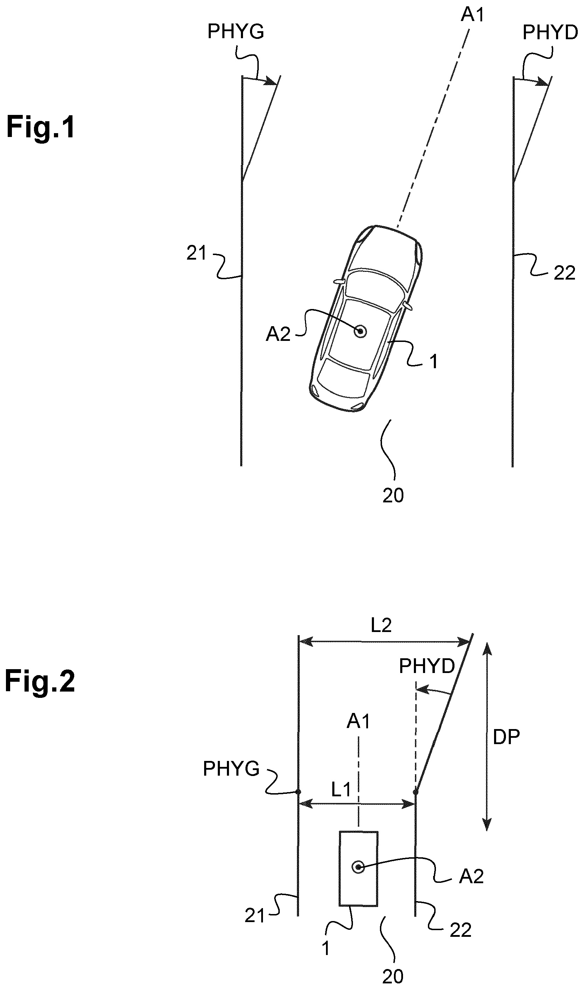

Sur la figure 1, on a représenté un véhicule 1, ici un véhicule automobile. Ce véhicule 1 peut être de tout type, par exemple voiture, camion ou moto. Il est prévu pour fonctionner de façon autonome ou semi autonome pour aider le conducteur du véhicule.

Il comporte à cet effet un système de direction qui permet d'agir sur l'orientation des roues directrices du véhicule et qui est commandé par un actionneur piloté.

Comme le montre la figure 1, le véhicule 1 définit une direction principale A1. La direction principale A1 est ici parallèle au sol et comprise dans le plan de symétrie du véhicule 1. La direction principale A1 correspond ici à la direction du véhicule 1 lorsque celui-ci roule en ligne droite. Le véhicule 1 définit aussi un axe vertical A2 orthogonal au sol et à la direction principale A1.

Comme le montre la figure 1, le véhicule 1 circule sur une voie de circulation 20, par la suite appelée voie 20, délimitée par des marquages au sol. Les marquages au sol comprennent ici une ligne gauche 21 et une ligne droite 22. Les lignes gauche 21 et droite 22 sont ici représentées par des lignes continues mais peuvent être tout type de ligne présent sur la chaussé telle que des lignes pointillées ou de longues bandes discontinues.

Les termes « droite » et « gauche » font ici référence à la droite et à la gauche du véhicule 1 lorsque celui-ci est vu par l'arrière, c'est-à-dire ici à la droite et à la gauche d'un conducteur installé dans le véhicule 1. Sur la figure 1, la ligne droite 22 est la ligne située à droite de la direction principale A1 du véhicule 1 et la ligne gauche 21 est située à gauche de la direction principale A1.

Le véhicule 1 est équipé d'un dispositif de capture d'images (non représenté). Le dispositif de capture d'images est situé à l'avant du véhicule 1 pour permettre de capter une image sur laquelle apparaissent la ligne gauche 21 et la ligne droite 22 encadrant la voie 20 sur laquelle circule le véhicule 1. Pour imager les deux lignes 21, 22, le dispositif de capture d'images peut comprendre un objectif grand angle ou une série de plusieurs objectifs.

Classiquement, le véhicule 1 comprend un processeur (non représenté), par exemple inclus dans une unité électronique de calcul et de commande, encore appelée calculateur. Le véhicule 1 comprend aussi une unité de mémorisation ou mémoire par exemple aussi incluse dans le calculateur. C'est sur cette mémoire que sont par exemple enregistrées les images acquises par le dispositif de capture d'images. Dans le contexte de l'invention, le processeur est connecté au dispositif de capture d'images de manière à traiter les images acquises par le dispositif de capture d'images. Le processeur est en outre programmé pour mettre en œuvre le procédé de guidage décrit ci-dessous. Pour cela, le processeur est aussi connecté aux systèmes permettant la conduite autonome ou semi-autonome du véhicule 1 (notamment au système de direction).

Le processeur est notamment programmé pour détecter, à partir des images capturées, la position des lignes gauche 21 et droite 22 par rapport au véhicule 1, c'est-à-dire par rapport à un référentiel lié au véhicule 1. Pour cela, le processeur est programmé pour mettre en œuvre des algorithmes de traitement d'images connus. De tel algorithmes sont notamment mis en œuvre au sein des véhicules autonomes.

La position d'une ligne 21 ; 22 représente, dans le référentiel lié au véhicule 1, la position de toute la ligne 21 ; 22 pouvant être imagée par le dispositif de capture d'images. Ainsi, dans un référentiel à deux dimensions la position d'une ligne 21 ; 22 est par exemple représentée par une courbe. En variante, on peut aussi prévoir que la position d'une ligne soit définie par les barycentres de segments de ligne d'une longueur prédéterminée. Dans le cas où la ligne est discontinue, par exemple dans le cas d'une ligne en pointillés, les parties non marquées peuvent par exemple être interpolées.

Ici, le processeur est programmé pour mettre en place un système de centrage basé sur le centrage du véhicule 1 sur la voie 20. Ce système de centrage guide le véhicule 1 pour qu'il soit en permanence à équidistance entre la ligne gauche 21 et la ligne droite 22, c'est-à-dire au milieu de la voie 20. Le système de centrage peut facilement être induit en erreur lors d'un élargissement de la voie 20, par exemple lors d'un dédoublement de voie, et amener le véhicule à suivre une trajectoire non-optimale, par exemple choisir une voie trop tard ou rester entre deux voies.

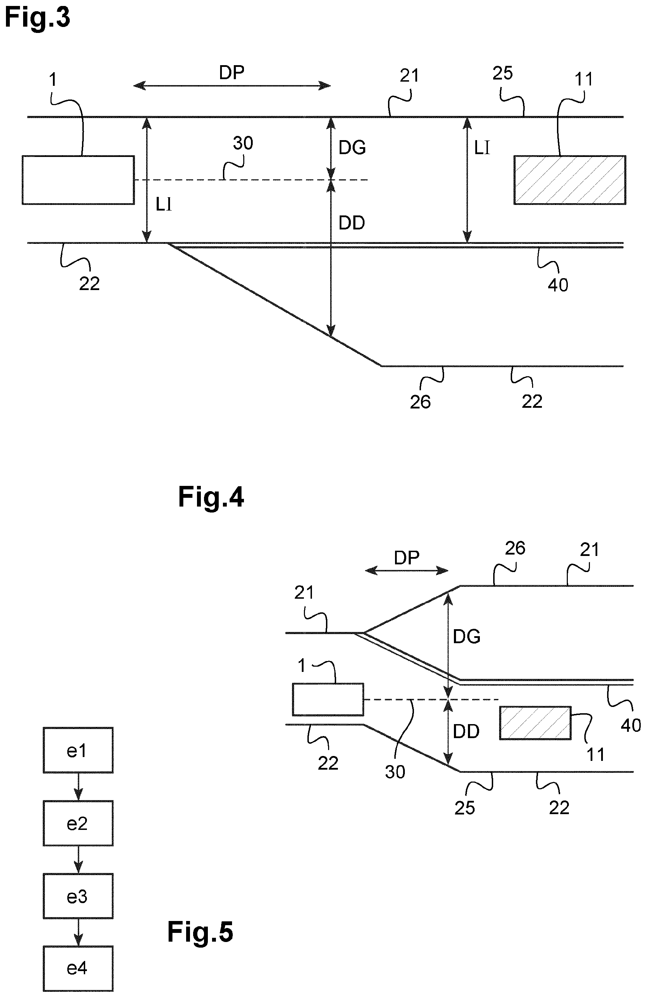

On s'intéresse maintenant en particulier à un procédé de guidage, illustré en figure 5, que le calculateur est programmé pour mettre en œuvre. Ce procédé de guidage permet notamment de corriger le système de centrage qui peut être trompé par un élargissement de la voie 20.

L'élargissement de voie peut être formel, par exemple lors d'un dédoublement de la voie ou d'une sortie. Dans ce cas, le système de guidage permet de maintenir le véhicule 1 dans la voie la plus logique, c'est-à-dire celle vers laquelle il se dirige, dans le prolongement de sa trajectoire.

L'élargissement de voie peut aussi être causé par une erreur de détection d'une ligne, on peut alors parler d'élargissement virtuel. En effet, il peut arriver qu'une ombre ou un reflet soit confondu avec une des deux lignes. Le système de guidage permet de ne pas prendre en compte cette mauvaise détection.

Dans les deux cas, grâce au procédé de guidage, le véhicule 1 ne suit pas de ligne indésirable.

Comme le montre la figure 5, le procédé de guidage du véhicule 1 comprend les étapes suivantes :
e1- la détection, sur la base de la position de la ligne droite 22 et de la position de la ligne gauche 21, d'un élargissement de la voie 20 ; et lorsqu'un élargissement est détecté :
e2- l'acquisition d'une trajectoire 30 du véhicule 1 ;
e3- la sélection, parmi la ligne droite 22 et la ligne gauche 21, d'une première ligne 25 qui s'écarte le moins de la trajectoire 30 ; et
e4- le guidage du véhicule automobile en fonction de la position de la première ligne 25.

### Etapes e1

Plus précisément, lors de l'étape de détection e1, le processeur analyse les positions de la ligne gauche 21 et de la ligne droite 22 pour détecter un élargissement de la voie 20. Un élargissement de voie 20 est par exemple illustré sur les figures 2 à 4. Un élargissement de la voie est défini par une augmentation de la largeur de la voie de circulation sur laquelle circule le véhicule.

Ici, la détection de l'élargissement peut s'effectuer selon deux critères principaux.

Un premier critère selon l' invention utilise des angles de cap entre le véhicule 1 et les lignes 21, 22. Plus précisément, la détection de l'élargissement est effectuée en fonction d'un angle de cap gauche PHYG entre la direction principale A1 du véhicule 1 et une direction principale de la ligne gauche 21 et d'un angle de cap droit PHYD entre ladite direction principale A1 du véhicule 1 et une direction principale de la ligne droite 22.

La direction principale d'une ligne 21 ; 22 peut être définie comme la tangente à la ligne 21 ; 22 en un point de la ligne 21 ; 22 à une distance prédéterminée à l'avant du véhicule 1 ou à côté du véhicule 1. De préférence, la tangente est déterminée aux points d'intersection entre une droite, définie par le front avant du véhicule 1 et perpendiculaire à l'axe principale A1, et les lignes 21,22.

De préférence, cette direction est estimée à une distance prédéterminée et non nulle à l'avant du véhicule 1. Cette distance prédéterminée peut varier de quelques mètres à quelques dizaines de mètres et peut par exemple dépendre de la vitesse du véhicule 1 : plus le véhicule est rapide, plus cette distance prédéterminée est grande pour laisser le temps au processeur d'effectuer des opérations.

Ainsi, dans le cas d'une section de voie rectiligne, comme le montre la figure 1, la direction principale de la ligne gauche 22 est confondue avec le tracé de la ligne gauche 21 et la direction principale de la ligne droite 22 est confondue avec le tracé de la ligne droite 22. L'angle de cap droite PHYD et l'angle de cap gauche PHYG sont alors tous les deux nuls. Dans un virage où les lignes gauche 22 et droite 21 restent parallèles, la direction principale de la ligne gauche 21 est donc parallèle à la direction principale de la ligne droite 22. L'angle de cap droit PHYD et l'angle de cap gauche PHYG peuvent être non nuls mais sont égaux.

En variante, on pourrait prévoir que la direction principale d'une ligne corresponde à une droite moyenne définie sur un segment de ligne située à l'avant du véhicule. La droite moyenne pourrait par exemple être obtenue par une régression linaire sur ce segment de ligne.

Les angles de cap PHYG, PHYD sont ici définis dans le sens horaire. Sur la figure 1, l'angle de cap gauche PHYG et l'angle de cap droit PHYD sont strictement supérieurs à zéro. Sur la figure 2 représentant un élargissement de la voie 20 vers la droite, l'angle de cap droit PHYD est négatif. Sur la figure 2, l'angle de cap droit PHYD est égal à environ -20 degrés et l'angle de cap gauche PHYG est nul. Un élargissement de la voie 20 vers la gauche se traduit par un angle de cap gauche PHYG positif.

Selon le premier critère, le processeur peut par exemple détecter un élargissement de voie 20 lorsqu'un angle de cap PHYG ; PHYD est, en valeur absolue, supérieur à un seuil non nul alors que l'autre angle de cap PHYD ; PHYG est inférieur à ce seuil.

Ici, plus spécifiquement, la détection e1 de l'élargissement est effectuée en fonction d'une différence entre l'angle de cap droit PHYD et l'angle de cap gauche PHYG. L'élargissement est par exemple détecté lorsque cette différence est non nulle.

Ici, notamment pour éviter de fausses détections, l'élargissement est détecté lorsque la différence entre l'angle de cap gauche PHYG et l'angle de cap droit PHYD est supérieure à une valeur seuil. La valeur seuil est de préférence comprise entre 0,005 et 0,025 radians. Elle est par exemple fixée à 0,012 radians. La valeur seuil peut être adaptée au pays ou au type de voie, ville ou autoroute par exemple, sur laquelle circule le véhicule 1. Les informations sur le pays ou le type de voie peuvent être acquise par exemple grâce à un système de navigation. En effet, en fonction du pays ou du type de voie, les élargissements sont plus ou moins marqués ou rapides.

Il est aussi prévu un critère d'exclusion sur la valeur absolue des angles de cap PHYG, PHYD. Par exemple, si l'angle de cap droit PHYD est supérieur en valeur absolue à 0,025 radians ou si l'angle de cap gauche PHYG est supérieur en valeur absolue à 0,025 radians, l'élargissement de voie est classifié comme une sortie, par exemple une sortie d'autoroute, et la suite du procédé de guidage n'est pas mise en œuvre. Cela signifie que les étapes d'acquisition e2, de sélection e3 et de guidage e4 ne sont pas déclenchées.

Un deuxième critère optionnel utilise une largeur de la voie 20. Plus spécifiquement la détection e1 de l'élargissement est effectuée en fonction d'au moins une largeur de la voie 20 déterminée à l'avant du véhicule 1. La position des lignes 21, 22 définit la largeur de la voie.

Comme le montre la figure 2, la largeur de la voie 20 peut par exemple être déterminée à deux distances à l'avant du véhicule 1. Une première largeur L1 est ici déterminée à moins de dix mètres à l'avant du véhicule 1 et une deuxième largeur L2 est déterminée à une distance de projection DP. Ici, la distance de projection DP est de plus de dix mètres, la distance de projection DP est par exemple comprise entre 10 m et 30 m. La distance de projection DP peut dépendre de la vitesse du véhicule 1 ou du type de voie pour classifier les élargissements de manière optimum.

Ici, comme le montre la figure 2, la largeur de la voie 20 est par exemple définie comme la longueur d'un segment de droite orthogonal à la direction principale A1 et parallèle au sol, allant d'une ligne 21 ; 22 à l'autre 22 ;21.

Comme décrit ultérieurement, la distance de projection DP peut aussi déterminer la dynamique du guidage e4 du véhicule. La distance de projection DP est donc choisie pour que d'éventuels changements de trajectoire ne soient pas trop brusques mais tout de même effectués sur une distance pas trop longue, par exemple pour ne pas conduire le véhicule 1 à cheval entre deux nouvelles voies.

Selon le deuxième critère, la détection e1 de l'élargissement peut être effectué en fonction d'une différence entre la première distance L1 et la deuxième distance L2. Par exemple, un élargissement de la voie 20 peut être détecté lorsque la deuxième distance L2 est supérieure à la première distance L1. En variante, pour éviter de fausses détections, on peut aussi prévoir que l'élargissement soit détecté lorsque la différence entre la deuxième largeur et la première largeur est supérieure à une valeur seuil.

Selon le deuxième critère, un élargissement de la voie 20 peut aussi être détecté lorsque la deuxième distance L2 est supérieure à une valeur seuil. La valeur seuil peut par exemple dépendre du type de route sur laquelle le véhicule 1 circule.

En pratique, le calculateur peut utiliser en combinaison les deux critères précités pour tenter de détecter un élargissement de voie.

### Etapes e2

Lorsque qu'un élargissement de voie est détecté à l'aide du premier critère ou des deux critères, les étapes d'acquisition e2, de sélection e3 et de guidage e4 sont automatiquement initiées. Après la détection e1 de l'élargissement, le processeur est tout d'abord programmé pour effectuer l'étape d'acquisition e2 d'une trajectoire 30 du véhicule 1.

Ici, la trajectoire 30 est acquise sur la base d'un ou de plusieurs des paramètres suivants : une vitesse de lacet et une vitesse longitudinale ; une
donnée de navigation ; un angle de rotation du volant ; une donnée issue d'un gyroscope.

La trajectoire 30 peut comprendre une trajectoire passée, par exemple que le véhicule 1 vient d'effectuer, acquise grâce à une donnée de navigation, par exemple issue d'un GPS ou de la mémoire du calculateur.

Ici, comme le montrent les figures 3 et 4, la trajectoire 30 comprend aussi une trajectoire estimée 30 que le véhicule est en train de suivre. La trajectoire estimée 30 peut être déterminée sur la base de la trajectoire passée, par exemple en modélisant la trajectoire passée et en effectuant une projection.

Ici, la trajectoire estimée 30 est par exemple acquise grâce à la vitesse de lacet et la vitesse longitudinale du véhicule 1. La vitesse longitudinale est la vitesse à laquelle avance le véhicule 1 dans la direction principale A1. La vitesse de lacet est la vitesse de rotation du véhicule autour de son axe vertical A2. La vitesse de lacet permet par exemple de déterminer si le véhicule 1 tourne ou louvoie dans la voie 20, c'est-à-dire si le véhicule 1 se déporte vers la gauche ou vers la droite. Combinée à la vitesse longitudinale, la vitesse de lacet permet de déterminer la courbure ou le rayon de courbure de la trajectoire instantanée du véhicule 1, c'est-à-dire la trajectoire estimée 30.

L'angle du volant ou une donnée issue d'un gyroscope interne peuvent aussi servir à déterminer la courbure de la trajectoire instantanée du véhicule 1.

Dans tous les cas, l'acquisition e2 de la trajectoire 30 du véhicule 1 permet d'évaluer le déplacement du véhicule 1.

### Etape e3

Une fois la trajectoire 30 du véhicule 1 acquise, le processeur sélectionne, parmi la ligne droite 22 et la ligne gauche 21, une première ligne 25 qui s'écarte le moins de la trajectoire 30. Par « s'écarter » on entend ici un écartement spatial mesurable par une distance. « S'écarter le moins » signifie donc aussi « rester le plus proche ».

En effet, grâce à la position de la ligne gauche 21 et de la ligne droite 22, il est possible de déterminer de quelle ligne 21 ; 22 la trajectoire 30 s'écarte le moins. De façon complémentaire, il est possible de déterminer une deuxième ligne 26 de laquelle la trajectoire s'écarte le plus.

Ici, la sélection de la première ligne 25, et donc de la deuxième ligne 26, est effectuée en fonction d'un déplacement latéral du véhicule 1 par rapport à la ligne gauche 21 et à la ligne droite 22.

En l'espèce, comme le montrent les figures 3 et 4, le déplacement latéral comprend un déplacement gauche DG entre la trajectoire 30 et la ligne gauche 21, et un déplacement droit DD entre la trajectoire et la ligne droite 22.

Le déplacement latéral est ici déterminé à la distance de projection DP. Ici, le déplacement latéral est la plus courte distance entre le point de la trajectoire 30 qui se situe à la distance de projection DP du véhicule 1 et la ligne 21 ; 22. Ainsi, sur la figure 3, le déplacement gauche DG est plus petit que le déplacement droit DD. Inversement, sur la figure 4, le déplacement gauche DG est plus grand que le déplacement droit DD.

Le déplacement latéral permet donc de déterminer de quelle ligne 21 ; 22 la trajectoire 30 s'écarte le moins. Déterminer le déplacement gauche DG et le déplacement droit DD à la distance de projection DP permet de sélectionner la première ligne 25, et par la suite d'activer le guidage e4, suffisamment tôt pour guider le véhicule 1 sans à-coups.

Par exemple, pour sélectionner la première ligne 25, le processeur calcule ici la différence entre la déplacement gauche DG et le déplacement droit DD. Le signe de cette différence permet de déterminer lequel du déplacement gauche DG ou du déplacement droit DD est le plus petit. Ainsi, par exemple, si la différence est positive, le déplacement droit DD est le plus petit et la ligne droite 22 est sélectionnée en tant que première ligne 25. Inversement, si la différence est négative, le déplacement gauche DG est plus petit que le déplacement droit 22 et la ligne gauche 21 est sélectionnée en tant que première ligne 25.

Pour éviter une erreur de sélection, la première ligne 25 est ici sélectionnée lorsque la différence est supérieure, en valeur absolue, à une valeur seuil. Cette valeur seuil peut par exemple être comprise entre 10 cm et 50 cm. Ainsi, si la différence entre le déplacement gauche DG et le déplacement droit DD est trop petite, aucune première ligne 25 n'est sélectionnée et l'étape de guidage e4 du véhicule 1 n'est pas effectuée. Lorsque le procédé s'arrête avant l'étape de guidage e4, le conducteur du véhicule 1 peut reprendre la main pour prendre une décision lui-même.

Ici, la première ligne 25 est sélectionnée seulement si la différence est assez grande, en valeur absolue, entre le déplacement droit DD et le déplacement gauche DG. Cela permet de prendre en compte certaines imprécisions par exemple sur la détection de la position des lignes 21, 22 ou sur l'acquisition de la trajectoire 30. En effet, une mauvaise estimation des déplacements droit DD et gauche DG peut conduire le véhicule 1 dans la mauvaise voie, par exemple celle où la distance parcourue pour s'y placer est la plus longue. La valeur seuil permet de limiter ces erreurs. Plus les étapes précédant la sélection e3, par exemple la détection de la position des lignes 21, 22 et l'acquisition e2 de la trajectoire 30, sont précises, plus la valeur seuil peut être petite.

En variante, la ligne dont la trajectoire s'écarte le moins peut être déterminée en calculant une courbure ou un rayon de courbure de la ligne droite, de la ligne gauche et de la trajectoire. La ligne qui s'écarte le moins est alors celle dont la courbure est la plus proche de la courbure de la trajectoire. Encore en variante, la ligne dont la trajectoire s'écarte le moins peut être déterminée en calculant l'aire entre la ligne droite et la trajectoire et l'aire en la ligne gauche et la trajectoire. La ligne qui s'écarte le moins est alors celle dont l'aire associée est la plus petite.

### Etapes e4

Une fois que la première ligne 25 est sélectionnée, le guidage du véhicule 1 est effectué en fonction de la position de la première ligne 25.

En particulier, le guidage du véhicule 1 peut être effectué uniquement en fonction de la position de la première ligne 25, parmi la position de la ligne droite 22 et la position de la ligne gauche 21, c'est-à-dire sans prendre en compte la position de la deuxième ligne 26.

Dans ce cas, le guidage e4 peut par exemple consister à longer la première ligne 25 à une distance déterminée. Cette distance déterminée peut par exemple être la distance à laquelle se situe le véhicule 1 de la première ligne 25 lorsque l'élargissement est détecté.

Tant que le véhicule 1 longe la première ligne 25, le système de centrage peut être désactivé. Le système de centrage peut être réactivé après une durée prédéterminée ou une fois que les lignes 21, 22 encadrants le véhicule 1 sont de nouveau parallèles.

Le guidage du véhicule 1 peut aussi être effectué en déterminant une position corrigée 40 de la deuxième ligne 26 et en guidant le véhicule 1 en fonction de la position corrigée 40.

Comme le montre les figures 3 et 4, la position corrigée 40, représentée par un double trait, est déterminée de telle sorte qu'elle forme une ligne, droite ou courbe, parallèle avec la première ligne 25 à partir du moment au l'élargissement est détecté. Ici, deux lignes courbes sont considérées comme parallèle lorsque toute droite normale à une ligne est normale à l'autre et que la distance entre les points d'intersection d'une normale aux deux lignes est constante.

Ici, la position corrigée 40 est déterminée sur la base de la position de la première ligne 25 et d'une largeur initiale LI déterminée avant que ou lorsque l'élargissement est détecté.

Pour cela, le processeur peut calculer et enregistrer, par exemple à intervalle de temps régulier, la largeur de la voie 20. L'intervalle de temps peut être par exemple de 10 ms. Lorsque l'élargissement est détecté, la largeur initiale LI peut alors être fixée à la dernière largeur de la voie 20 enregistrée.

Ensuite, comme le montre la figure 3, le processeur détermine la position de la deuxième ligne 40 de telle sorte que la distance entre la première ligne 25 et la position corrigée 40 soit égale à la largeur initiale LI. Si la deuxième ligne 26 est la ligne droite 22, le processeur applique la largeur initiale LI à droite de la ligne gauche 21. Ainsi, dans l'exemple illustré en figure 3, la position corrigée de la ligne 40 est dans le prolongement de la ligne droite 22, qui est ici la deuxième ligne 26. Inversement, si la deuxième ligne 26 est la ligne gauche 21, le processeur applique la largeur initiale LI à gauche de la ligne droite 22.

Avec la position corrigée 40, le guidage e4 peut alors consister à maintenir le véhicule à équidistance de la première ligne 25 et de la position corrigée 40 de la deuxième ligne 26. Cela signifie que le système de centrage peut continuer à fonctionner en se basant sur la position de la première ligne 25 et sur la position corrigée 40 de la deuxième ligne 26 pour guider le véhicule 1.

Dans ce cas, le guidage e4 peut aussi consister à conduire le véhicule 1 à équidistance de la première ligne 25 et de la position corrigée 40 de la deuxième ligne 26 après une durée ou une distance prédéterminée. Par exemple, le guidage e4 peut faire en sorte que le véhicule 1 soit à équidistance de la première ligne 25 et de la position corrigée 40 de la deuxième ligne 26 une fois la distance de projection DP parcourue.

Le guidage du véhicule 1 peut alors être optimisé sur une distance sensiblement égale à la distance de projection DP. L'optimisation de la trajectoire sur la distance DP peut par exemple consister à minimiser à la fois la distance parcourue et les forces centrifuges ressenties par le conducteur. Lorsque le véhicule 1 doit se décaler pour aller dans une des deux nouvelles voies, le décalage peut commencer dès la détection e1 de l'élargissement pour se terminer une fois la distance de projection DP parcourue. Optimiser le guidage e4 sur la distance de projection DP permet de réagir à temps sans guider le véhicule de façon trop brutale. Ici, la distance de projection DP est déterminée de façon à trouver un compromis entre le confort du guidage e4 et la fiabilité de la sélection de ligne e3. Plus la distance de projection DP est grande, plus le guidage e4 est confortable mais plus la fiabilité de la sélection de ligne e3 baisse, notamment à cause de la résolution de l'image de la voie 20.

Les figures 3 et 4 illustrent des résultats du procédé de guidage du véhicule 1. Après avoir détecté et franchi l'élargissement, le véhicule (dont la référence est alors notée 11) est représenté dans une des deux nouvelles voies.

Sur la figure 3, représentant un élargissement de la voie 20 vers la droite, la trajectoire 30 s'écarte le moins de la ligne gauche 21 qui est alors sélectionné comme la première ligne 25. Le procédé de guidage conduit donc le véhicule 1 vers la nouvelle voie de gauche en avançant de façon rectiligne. Ce guidage e4 permet un trajet optimal en termes de distance parcourue compte tenue de la trajectoire 30 du véhicule 1 lorsque l'élargissement est détecté.

Sur la figure 4, représentant un élargissement de la voie 20 vers la droite et vers la gauche, la trajectoire 30 s'écarte le moins de la ligne droite 22 qui est alors sélectionnée comme la première ligne 25. Le procédé de guidage conduit donc le véhicule 1 vers la nouvelle voie de droite. Ce guidage e4 permet un trajet optimal en termes de distance parcourue compte tenue de la trajectoire 30 du véhicule lorsque l'élargissement est détecté. En effet, le véhicule 1 est moins dévié, par rapport à sa trajectoire 30 rectiligne, en étant guidé vers la nouvelle voie de droite qu'en étant guidé vers la nouvelle voie de gauche.

La présente invention n'est nullement limitée aux modes de réalisation décrits et représentés, mais l'homme du métier saura y apporter toute variante conforme à I invention telle que définie par les revendications annexées.

## Revendications

1. Procédé de guidage d'un véhicule automobile (1) comprenant un dispositif de capture d'images conçu pour détecter la position d'une ligne droite (22) et la position d'une ligne gauche (21), ladite ligne droite (22) et ladite ligne gauche (21) encadrant une voie de circulation (20) sur laquelle circule ledit véhicule automobile (1), ledit procédé comprenant les étapes suivantes :
- la détection (e1), sur la base de la position de ladite ligne droite (22) et de la position de ladite ligne gauche (21), d'un élargissement de ladite voie (20) ;
et lorsqu'un élargissement est détecté :
- l'acquisition (e2) d'une trajectoire (30) dudit véhicule automobile (1) ;
- la sélection (e3), parmi ladite ligne droite (22) et ladite ligne gauche (21), d'une première ligne (25) qui s'écarte le moins de ladite trajectoire (30) ; et
- le guidage (e4) dudit véhicule automobile (1) en fonction de ladite position de ladite première ligne (25),
**caractérisée en ce que** ladite détection dudit élargissement est effectuée en fonction d'une différence entre un angle de cap gauche (PHYG), entre une direction principale (A1) dudit véhicule automobile (1) et une direction principale de ladite ligne gauche (21), et d'un angle de cap droit (PHYD), entre ladite direction principale (A1) dudit véhicule automobile (A1) et une direction principale de ladite ligne droite (22).

2. Procédé de guidage selon la revendication 1, dans lequel la sélection (e3) de ladite première ligne (25) est effectuée en fonction d'un déplacement latéral (DD ; DG) dudit véhicule automobile (1) par rapport à ladite ligne gauche (21) et à ladite ligne droite (22), ledit déplacement latéral (DD ; DG) étant déterminé à une distance de projection (DP) prédéterminée à l'avant du véhicule (1).

3. Procédé de guidage selon l'une des revendications 1 à 2, dans lequel le guidage (e4) dudit véhicule automobile (e1) est effectué uniquement en fonction de la position de ladite première ligne (25).

4. Procédé de guidage selon l'une des revendications 1 à 3, comprenant une étape de détermination d'une position corrigée (40) d'une deuxième (26) desdites lignes droite (22) et gauche (21) ; et dans lequel le guidage (e4) dudit véhicule automobile (1) est effectué en fonction de ladite position corrigée (40).

5. Procédé de guidage selon la revendication 4, dans lequel ladite position corrigée (40) est déterminée sur la base de la position de ladite première ligne (25) et d'une largeur initiale (LI) déterminée avant que ou lorsque ledit élargissement est détecté.

6. Procédé de guidage selon l'une des revendications 1 à 5, dans lequel la détection (e1) dudit élargissement est effectuée en fonction d'au moins une largeur (L1 ; L2) de ladite voie (20) déterminée à l'avant dudit véhicule (1).

7. Procédé de guidage selon l'une des revendications 1 à 6, dans lequel ladite trajectoire (30) est acquise sur la base d'au moins l'un des paramètres suivants :
- une vitesse de lacet et une vitesse longitudinale ;
- une donnée de navigation ;
- un angle de rotation du volant ;
- une donnée issue d'un gyroscope.

8. Véhicule automobile (1) comprenant un dispositif de capture d'images conçu pour capter une image sur laquelle apparaissent une ligne droite (21) et une ligne gauche (22), lesdites lignes (21 ; 22) encadrant une voie de circulation (20) sur laquelle circule ledit véhicule automobile (1), et un processeur programmé pour mettre en œuvre un procédé de guidage selon l'une des revendication 1 à 7.

## Patentansprüche

1. Verfahren zum Führen eines Kraftfahrzeugs (1), das eine Vorrichtung zum Aufnehmen von Bildern umfasst, die dazu ausgelegt ist, die Position einer rechten Linie (22) und die Position einer linken Linie (21) zu erfassen, wobei die rechte Linie (22) und die linke Linie (21) eine Fahrspur (20) begrenzen, auf der das Kraftfahrzeug (1) fährt, wobei das Verfahren die folgenden Schritte umfasst:
- das Detektieren (e1), auf der Grundlage der Position der rechten Linie (22) und der Position der linken Linie (21), einer Verbreiterung der Spur (20); und, wenn eine Verbreiterung detektiert wird:
- das Erfassen (e2) einer Trajektorie (30) des Kraftfahrzeugs (1);
- das Auswählen (e3), aus der rechten Linie (22) und der linken Linie (21), einer ersten Linie (25), die sich am wenigsten von der Trajektorie entfernt (30); und
- das Führen (e4) des Kraftfahrzeugs (1) in Abhängigkeit von der Position der ersten Linie (25),
**dadurch gekennzeichnet, dass** das Detektieren der Verbreiterung in Abhängigkeit von einer Differenz zwischen einem linken Kurswinkel (PHYG), zwischen einer Hauptrichtung (A1) des Kraftfahrzeugs (1) und einer Hauptrichtung der linken Linie (21), und einem rechten Kurswinkel (PHYD) zwischen der Hauptrichtung (A1) des Kraftfahrzeugs (A1) und einer Hauptrichtung der rechten Linie (22) erfolgt.

2. Verfahren zum Führen nach Anspruch 1, bei dem das Auswählen (e3) der ersten Linie (25) in Abhängigkeit von einer seitlichen Verlagerung (DD; DG) des Kraftfahrzeugs (1) in Bezug auf die linke Linie (21) und die rechte Linie (22) erfolgt, wobei die seitliche Verlagerung (DD; DG) in einem vorbestimmten Projektionsabstand (DP) vor dem Fahrzeug (1) bestimmt wird.

3. Verfahren zum Führen nach einem der Ansprüche 1 bis 2, bei dem das Führen (e4) des Kraftfahrzeugs (e1) ausschließlich in Abhängigkeit von der Position der ersten Linie (25) erfolgt.

4. Verfahren zum Führen nach einem der Ansprüche 1 bis 3, das einen Schritt des Bestimmens einer korrigierten Position (40) einer zweiten (26) der rechten (22) und linken (21) Linien umfasst; und bei dem das Führen (e4) des Kraftfahrzeugs (1) in Abhängigkeit von der korrigierten Position (40) erfolgt.

5. Verfahren zum Führen nach Anspruch 4, bei dem die korrigierte Position (40) auf der Grundlage der Position der ersten Linie (25) und einer vor oder bei dem Detektieren der Verbreiterung bestimmten Ausgangsbreite (LI) bestimmt wird.

6. Verfahren zum Führen nach einem der Ansprüche 1 bis 5, wobei das Detektieren (e1) der Verbreiterung in Abhängigkeit von mindestens einer vor dem Fahrzeug (1) bestimmten Breite (L1; L2) der Spur (20) erfolgt.

7. Verfahren zum Führen nach einem der Ansprüche 1 bis 6, bei dem die Trajektorie (30) auf der Grundlage mindestens eines der folgenden Parameter erfasst wird:
- eine Giergeschwindigkeit und eine Längsgeschwindigkeit;
- ein Navigationsdatenelement;
- ein Drehwinkel des Lenkrads;
- ein Datenelement, das aus einem Gyroskop hervorgegangen ist.

8. Kraftfahrzeug (1), umfassend eine Vorrichtung zum Aufnehmen von Bildern, die dazu ausgelegt ist, ein Bild aufzunehmen, auf dem eine rechte Linie (21) und eine linke Linie (22) erscheinen, wobei die Linien (21; 22) eine Fahrspur (20) begrenzen, auf der das Kraftfahrzeug (1) fährt, und einen Prozessor, der dazu programmiert ist, ein Verfahren zum Führen nach dem der Ansprüche 1 bis 7 zu implementieren.

## Claims

1. Method for guiding a motor vehicle (1) comprising an image-capturing device designed to detect the position of a right-hand line (22) and the position of a left-hand line (21), said right-hand line (22) and said left-hand line (21) flanking a traffic lane (20) in which said motor vehicle (1) is driving, said method comprising the following steps:
- detecting (e1), based on the position of said right-hand line (22) and on the position of said left-hand line (21), widening of said lane (20); and when widening is detected:
- acquiring (e2) a path (30) of said motor vehicle (1);
- selecting (e3), from said right-hand line (22) and said left-hand line (21), a first line (25) that is deviating the least from said path (30); and
- guiding (e4) said motor vehicle (1) depending on said position of said first line (25),
**characterized in that** said widening is detected depending on a difference between a left-hand heading angle (PHYG), between a main direction (A1) of said motor vehicle (1) and a main direction of said left-hand line (21), and on a right-hand heading angle (PHYD), between said main direction (A1) of said motor vehicle (A1) and a main direction of said right-hand line (22).

2. Guiding method according to Claim 1, wherein said first line (25) is selected (e3) depending on a lateral movement (DD; DG) of said motor vehicle (1) with respect to said left-hand line (21) and to said right-hand line (22), said lateral movement (DD; DG) being determined at a predetermined projection distance (DP) in front of the vehicle (1).

3. Guiding method according to either of Claims 1 and 2, wherein said motor vehicle (e1) is guided (e4) solely depending on the position of said first line (25).

4. Guiding method according to one of Claims 1 to 3, comprising a step of determining a corrected position (40) of a second (26) of said right-hand and left-hand lines (22, 21); and wherein said motor vehicle (1) is guided (e4) depending on said corrected position (40).

5. Guiding method according to Claim 4, wherein said corrected position (40) is determined based on the position of said first line (25) and on an initial width (LI) determined before or when said widening is detected.

6. Guiding method according to one of Claims 1 to 5, wherein said widening is detected (e1) depending on at least one width (L1; L2) of said lane (20) determined in front of said vehicle (1).

7. Guiding method according to one of Claims 1 to 6, wherein said path (30) is acquired based on at least one of the following parameters:
- a yaw speed and a longitudinal speed;
- a navigation datum;
- an angle of rotation of the steering wheel;
- a datum obtained from a gyroscope.

8. Motor vehicle (1) comprising an image-capturing device designed to capture an image in which a right-hand line (21) and a left-hand line (22) appear, said lines (21; 22) flanking a traffic lane (20) in which said motor vehicle (1) is driving, and a processor programmed to implement a guiding method according to one of Claims 1 to 7.
